# EUROPEAN PATENT APPLICATION

(11) **EP 3 421 736 A1**
(43) Date of publication of application: **02.01.2019**
(21) Application number: 18175058.9
(22) Date of filing: 30.05.2018
(51) Int. Cl.: F01D 25/12, F01D 5/08, F02C 6/08

(54) **COOLING OF BEARING CHAMBERS IN A GAS TURBINE ENGINE**

(30) Priority: 28.06.2017 GB 201710314
(71) Applicant: Rolls-Royce plc, London SW1E 6AT (GB)
(72) Inventor: Evans, Peter, Derby, Derbyshire DE24 8BJ (GB); Carpenter, Adam, Derby, Derbyshire DE24 8BJ (GB)
(74) Representative: Rolls-Royce plc

(57) **Abstract**

A cooling arrangement for cooling a bearing in a gas turbine engine, the gas turbine engine comprising a compressor section (14), a combustor section (15) and a turbine section (16, 17), the turbine section comprising a low pressure (LP) sub-section (17) and a high pressure (HP) sub-section (16), a first shaft (23) for carrying rotors of the compressor section (14) and of the HP turbine sub-section (16) and a second shaft (22) for carrying rotors of the LP turbine sub-section (17) the second shaft (22) coaxially aligned with and located within the first shaft (23), and the bearing arranged downstream of the HP turbine sub-section (16) and upstream of the LP turbine sub-section (17) and arranged for rotatably mounting the second shaft (22) with respect to a support structure (28),
the cooling arrangement comprising; a first bleed (26) taken off from the compressor (14), one or more inlet holes (39) in the second shaft (22) located upstream of the combustor (15) and one or more outlet holes (40) in the second shaft (22) located downstream of the HP turbine sub-section (16) and upstream of the bearing (24), and an air guide (37) for guiding flow from the first bleed (26) to the one or more inlet holes (39) whereby to separate the flow from the first bleed (26) from a coolant flow (25) directed to cool discs of the turbine section (16, 17).

## Description

The present disclosure concerns the cooling of bearing chambers in a gas turbine engine. More particularly the disclosure concerns an air guide arrangement for use in cooling bearing chambers.

It is a recognised requirement in gas turbine engines to provide cooling to components downstream of the combustor. Typically air is bled from the compressor, bypasses the combustor and is directed to the components most in need of cooling. Multiple bleeds may be taken from the compressor, optionally from different compressor stages. The bleeds may be at different temperatures.

Significant components in need of cooling are bearings which serve to rotatably mount a shaft on which components of the Low Pressure (LP) pressure turbine are mounted. More particularly, it is important to maintain the temperature of oil used to lubricate the bearings below a defined maximum temperature in order to prevent ignition of the oil.

Known cooling arrangements use multiple bleeds from the compressor including a first bleed to cool the turbine discs and a second bleed to cool the stated bearings. These two bleeds are kept separate by an air guide. To minimise heat transfer between the two bleeds, the air guide may be engineered to insulate one bleed from another. For example, high cost insulating materials, layers or coatings may be applied to the guide tube to improve insulation.

According to a first aspect there is provided a cooling arrangement for cooling a bearing in a gas turbine engine, the gas turbine engine comprising a compressor section, a combustor section and a turbine section, the turbine section comprising a low pressure (LP) sub-section and a high pressure (HP) sub-section, a first shaft for carrying rotors of the compressor section and of the HP turbine sub-section and a second shaft for carrying rotors of the LP turbine sub-section the second shaft coaxially aligned with and located within the first shaft, and the bearing arranged downstream of the HP turbine sub-section and upstream of the LP turbine sub-section and arranged for rotatably mounting the second shaft with respect to a support structure,
the cooling arrangement comprising a first bleed taken off from the compressor, one or more inlet holes in the second shaft located upstream of the combustor and one or more outlet holes in the second shaft located downstream of the HP turbine sub-section and upstream of the bearing, and an air guide for guiding flow from the first bleed to the one or more inlet holes whereby to separate the flow from the first bleed from a coolant flow directed to cool discs of the turbine section.

In the context of this description, "upstream" and "downstream" refer to the direction of flow of a working fluid stream through the engine, typically in a direction from the compressor towards the turbines.

The first bleed may be one of multiple bleeds of which one or more of the multiple bleeds is directed to cool a component other than the bearing. For example, a second bleed may be directed to cool discs of the turbine section. The first bleed may be taken off at a location upstream of the take off for the second bleed. For example, the first and second bleeds may be taken from different stages of the compressor. For example, the first bleed may be taken from a high pressure section of the compressor and the second bleed may be taken from a lower pressure section of the compressor.

The air guide may comprise a tube arranged in a space between the first shaft and second shaft and extending axially with respect to an axis of the first and second shaft from a position downstream of the first hole to a position upstream of the second hole.

The air guide may be secured to the first shaft and arranged to rotate therewith A small gap may separate the air guide from an outer surface of the second shaft. In the latter case, one or more seals or discouragers may optionally be located across the small gap to discourage flow from the bleed from passing along the small gap. For example, one or more labyrinth seals may be located across the small gap. Upstream and downstream ends of the air guide tube may be flared away from the axis and towards an inner surface of the first shaft and attached to the inner surface whereby to form a seal therewith.

The inlet and outlet holes may extend radially. Optionally, the inlet and outlet holes may be inclined to a radial direction with respect to the axis of the first and second shafts in a manner which guides flow into and out of the second shaft in an upstream to a downstream direction.

The first bleed may be taken off at a location upstream from a take-off for a second bleed where the second bleed flow is directed to cool discs of the turbine section.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 is a sectional side view of a gas turbine engine;
Figure 2 is a more detailed view of a section of the gas turbine engine of Figure 1;
Figure 3 shows a first embodiment of the invention;

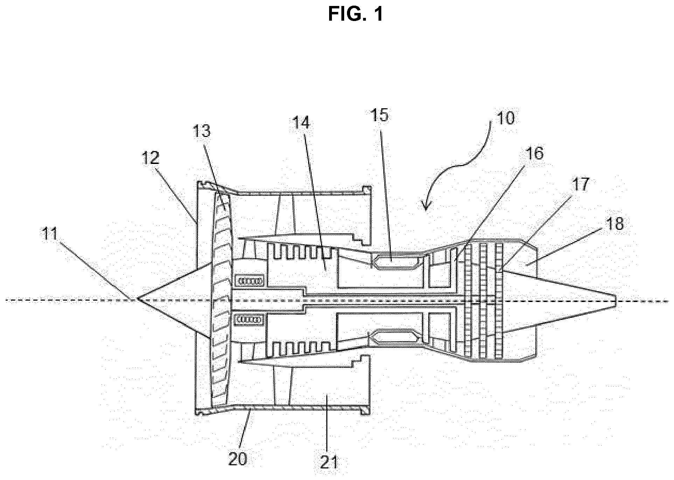

With reference to Figure 1, a gas turbine engine of a turbofan type is generally indicated at 10, having a principal and rotational axis 11. The engine 10 comprises, in axial flow series, an air intake 12, a propulsive fan 13, a high-pressure compressor 14, combustion equipment 15, a high-pressure turbine 16, a low-pressure turbine 17 and an exhaust nozzle 18. A nacelle 20 generally surrounds the engine 10 and defines the intake 12.

The gas turbine engine 10 works in the conventional manner so that air entering the intake 12 is accelerated by the fan 13 to produce two air flows: a first air flow into the high-pressure compressor 14 and a second air flow which passes through a bypass duct 21 to provide propulsive thrust. The high-pressure compressor 14 compresses the air flow directed into it before delivering that air to the combustion equipment 15.

In the combustion equipment 15 the air flow is mixed with fuel and the mixture combusted. The resultant hot combustion products then expand through, and thereby drive the high and low-pressure turbines 16, 17 before being exhausted through the nozzle 18 to provide additional propulsive thrust. The high 16 and low 17 pressure turbines drive respectively the high pressure compressor 14 and the fan 13, each by suitable interconnecting shaft. The skilled person will appreciate that the present invention has equal application to engines of turbo fan, turbo jet and turbo shaft propulsion systems.

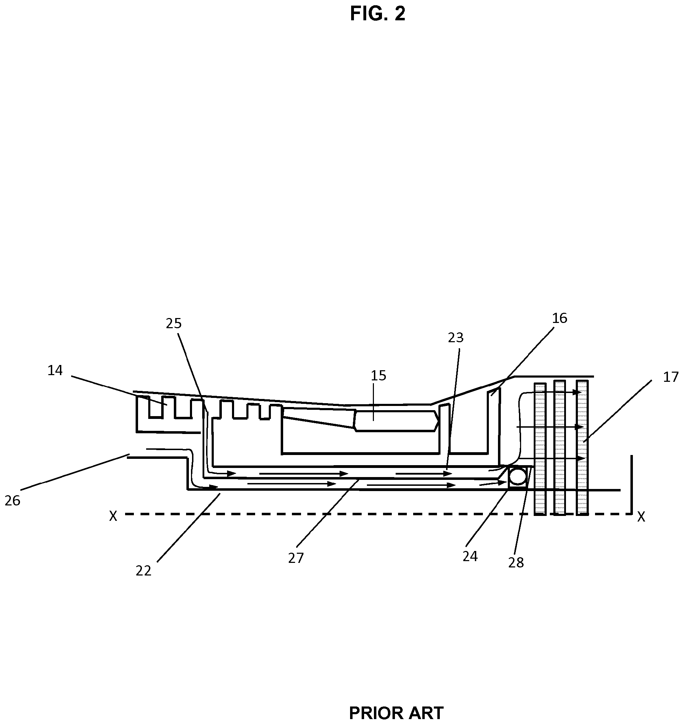

Figure 2 shows detail of a known cooling air flow arrangement for cooling turbine discs and bearings in a gas turbine engine having a construction broadly similar to that of Figure 1. The same reference numerals are used to consistently identify components common to both Figures.

As can be seen in Figure 2, the low pressure turbines 17 are mounted on a first shaft 22. High pressure turbines 16 are mounted on a second shaft 23, coaxial with first shaft 22 about axis X-X. The first shaft 22 passes through a centre of second shaft 23. The first shaft 22 is mounted for rotation about the axis X-X by means of bearing 24 mounted in a support structure 28 which may extend from the second shaft 23. Cooling air is bled from the compressor 14 from two locations; a first bleed 26 directs cooling air to the bearing 24 and a second bleed 25 directs cooling air to the discs of turbines 16 and 17. First and second bleeds 25, 26 are separated by an air guide 27 which extends axially between an inner wall of the second shaft 23 and an outer wall of the first shaft 22 from just upstream of the second bleed 25 to just downstream of the high pressure turbines 16.

Typically air from the second bleed 25 is at a higher temperature than air from the first bleed. Air from the second bleed 25 may also pick up heat from the combustor 15 and high pressure turbines 16 as it travels downstream. If the air guide 27 is insufficiently insulating, this heat may be conducted to the first bleed 26. As a consequence, oil for lubricating the bearing 24 may not be adequately cooled.

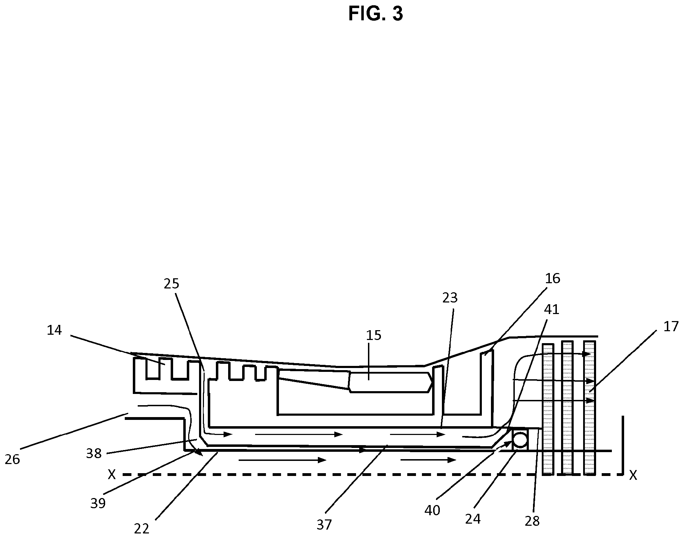

Figure 3 shows an embodiment of a bearing cooling arrangement incorporated into a gas turbine engine having a construction broadly similar to that of Figure 1. The same reference numerals are used to consistently identify components common to both Figures.

As can be seen in Figure 3, the low pressure turbines 17 are mounted on a first shaft 22. High pressure turbines 16 are mounted on a second shaft 23, coaxial with first shaft 22 about axis X-X. The first shaft 22 passes through a centre of second shaft 23. The first shaft 22 is mounted for rotation about the axis X-X by means of bearing 24 mounted in a support structure 28 which may extend from the second shaft 23.. Cooling air is bled from the compressor 14 from two locations; a first bleed 26 directs cooling air to the bearing 24 and a second bleed 25 directs cooling air to the discs of turbines 16 and 17. Typically air from the second bleed 25 is at a higher temperature than air from the first bleed 26. Air from the second bleed may also pick up heat from the combustor 15 and high pressure turbines 16 as it travels downstream.

A first hole 39 (or circumferential array of holes) is provided in the first shaft 22 just upstream of the second bleed 25. A second hole 40 (or circumferential array of holes) is provided in the first shaft 22 just downstream of the high pressure turbines 16 and upstream of the low pressure turbines 17, near the bearing 24.

An air guide 37 which extends axially between an inner wall of the second shaft 23 and an outer wall of the first shaft 22 from just downstream of the first hole 39 to just upstream of the second hole 40. A seal 38 extends from an upstream end of the air guide 37 separating the first bleed 26 from the second bleed 25. The seal may be attached to the second shaft 23. The air guide 37 may be arranged close to the first shaft 22 with a small radial gap to allow for relative rotation between the guide and the first shaft 22.

As shown, cooling air flow from the first bleed 26 is guided through the first hole 39 into the shaft 22 and exits the shaft 22 through second hole 40 just upstream of the bearing 24. A section 41 of the air guide 37 serves to guide the flow exiting the shaft 22 towards the bearing 24 and provides a seal between the flow and an oncoming flow from second feed 25 which has passed over the discs of the high pressure turbines 16. One or more seals or discouragers may be provided between opposing surfaces of the air guide 37 and the second shaft 22 to encourage flow from the second bleed 26 into the first hole 39.

Bypassing the first bleed 26 flow through the shaft 22 reduces the transference of heat from the second bleed 25 flow to the cooler first bleed 26 flow. The bearing 24 is consequently more efficiently cooled. A possible benefit of the arrangement is that a reduced quantity of air may be required from the first bleed 26 allowing a greater portion of the compressed air to be directed to the combustion and turbine sections of the engine thereby improving engine efficiency.

Other gas turbine engines to which the present disclosure may be applied may have alternative configurations. By way of example such engines may have an alternative number of interconnecting shafts (e.g. three) and/or an alternative number of compressors and/or turbines. Further the engine may comprise a gearbox provided in the drive train from a turbine to a compressor and/or fan.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A cooling arrangement for cooling a bearing in a gas turbine engine, the gas turbine engine comprising a compressor section (14), a combustor section (15) and a turbine section (16, 17), the turbine section comprising a low pressure (LP) sub-section (17) and a high pressure (HP) sub-section (16), a first shaft (23) for carrying rotors of the compressor section (14) and of the HP turbine sub-section (16) and a second shaft (22) for carrying rotors of the LP turbine sub-section (17) the second shaft (22) coaxially aligned with and located within the first shaft (23), and the bearing arranged downstream of the HP turbine sub-section (16) and upstream of the LP turbine sub-section (17) and arranged for rotatably mounting the second shaft (22) with respect to a support structure (28),
the cooling arrangement comprising;
a first bleed (26) taken off from the compressor (14), one or more inlet holes (39) in the second shaft (22) located upstream of the combustor (15) and one or more outlet holes (40) in the second shaft (22) located downstream of the HP turbine sub-section (16) and upstream of the bearing (24), and an air guide (37) for guiding flow from the first bleed (26) to the one or more inlet holes (39) whereby to separate the flow from the first bleed (26) from a coolant flow (25) directed to cool discs of the turbine section (16, 17).

2. A cooling arrangement as claimed in claim 1 further comprises a second bleed (25), flow from the second bleed being directed to cool discs of the turbine section (16, 17) and wherein the first bleed (26) is taken off at a location upstream of the take off for the second bleed (25).

3. A cooling arrangement as claimed in claim 2 wherein the first and second bleeds (25, 26) are taken from different sections of the compressor (14).

4. A cooling arrangement as claimed in claim 2 or claim 3 wherein the take-off for the second bleed (25) is downstream of the take-off for the first bleed (26).

5. A cooling arrangement as claimed in any preceding claim wherein the air guide (37) comprises a tube arranged in a space between the first shaft (23) and second shaft (22) and extending axially with respect to an axis (X-X) of the first and second shafts (23, 22) from a position downstream of the first hole (39) to a position upstream of the second hole (40).

6. A cooling arrangement as claimed in claim 5 wherein the air guide (37) is in contact with an inner surface of the first shaft (23).

7. A cooling arrangement as claimed in claim 5 wherein a small gap separates the air guide (37) from the outer surface of the second shaft (22) and one or more seals or discouragers is located across the small gap to discourage flow from the first bleed from passing along the small gap.

8. A cooling arrangement as claimed in claim 7 wherein the one or more seals comprises a labyrinth seal.

9. A cooling arrangement as claimed in any of claims 5 to 8 wherein upstream and downstream ends (38, 41) of the air guide tube (37) are flared away from the axis and towards an inner surface of the first shaft (23) and attached to the inner surface whereby to form a seal with the first shaft (23).

10. A cooling arrangement as claimed in any preceding claim wherein the inlet and/or outlet holes (39, 40) extend radially.

11. A cooling arrangement as claimed in any of claims 1 to 9 wherein the inlet and/or outlet holes are inclined to a radial direction with respect to the axis (X-X) of the first and second shafts (22, 23) in a manner which guides flow into and/or out of the second shaft (22) in an upstream to a downstream direction.

12. A gas turbine engine comprising a compressor section (14), a combustor section (15) and a turbine section (16, 17), the compressor section (14) comprising rotors mounted around a first shaft (23), the turbine section comprising rotors mounted around a second shaft (22), the second shaft (22) coaxially aligned with and located within the first shaft (23), and the bearing (24) arranged upstream of the turbine section for rotatably mounting the second shaft (22) with respect to a support structure, and a cooling arrangement, the cooling arrangement having the form as claimed in any of claims 1 to 10.
